Europäisches Patentamt

European Patent Office

Office européen des brevets

(19)

(11) Publication number: **0 045 291**
**B1**

(12) **EUROPEAN PATENT SPECIFICATION**

(45) Date of publication of patent specification: **13.06.84**

(51) Int. Cl.³: **C 04 B 41/06, C 23 C 11/08**

(21) Application number: **81850125.6**

(22) Date of filing: **20.07.81**

(54) Method of making a coated cemented carbide body and body produced in such a manner.

(30) Priority: **28.07.80 SE 8005413**

(43) Date of publication of application:
**03.02.82 Bulletin 82/5**

(45) Publication of the grant of the patent:
**13.06.84 Bulletin 84/24**

(84) Designated Contracting States:
**DE FR GB IT**

(56) References cited:
**DE - A - 2 825 009**
**US - A - 3 736 107**
**US - A - 4 150 195**

(73) Proprietor: **SANDVIK AKTIEBOLAG**
**S-811 81 Sandviken 1 (SE)**

(72) Inventor: **Lindström, Jan**
**Klyvningsvägen 31**
**S-145 60 Norsborg (SE)**
Inventor: **Smith, Ulf**
**Sofiebergsvägen 47B**
**S-141 42 Huddinge (SE)**

(74) Representative: **Östlund, Alf Olof Anders et al,**
**Sandvik AB Patents and Licences**
**S-811 81 Sandviken (SE)**

Courier Press, Leamington Spa, England.

# 0 045 291

## Description

The present invention relates to a method of producing thin, even and extremely wear resistant surface layers of aluminum oxide on cemented carbide substrates. The latter may be uncoated or have coatings produced in other processes or in process steps immediately preceding the process step described hereinbelow.

It is known that the wear resistance of pressed and sintered cemented carbide bodies, as for example, inserts for chipforming machining, can be increased considerably by applying hard surface layers. In particular, coatings of metal carbides, metal nitrides or metal oxides have been applied as thin layers (having, for example, a thickness between 0.1 to 20 $\mu$m) on the cemented carbide core or the substrate. It is also known that further advantages can be reached in certain cases by using a thin coating composed of two or more different layers applied on top of each other, for example, the use of a metal carbide or nitride as an intermediate layer below an outer ceramic layer. Aluminum oxide ($Al_2O_3$) and zirconium oxide ($ZrO_2$) are examples of such ceramic surface layers.

The main method of applying the surface coatings is the CVD-technique or "Chemical Vapor Deposition", in which the coatings are deposited on a hot substrate by reaction between gaseous components. For the production of aluminum oxide coatings, the most common chemical vapor deposition system which has been employed utilizes a hydrolyses reaction of aluminum chloride, the latter being either evaporated directly or formed by the reaction between aluminum metal and chlorine or hydrogen chloride, and the reaction with water vapor, which is either evaporated directly or formed by the reaction between hydrogen and carbon dioxide or oxygen.

The formation of an aluminum oxide coating depends, among other things, upon the diffusion of species from the substrate and/or the gas phase. The relationship between the various diffusion, nucleation and growth mechanisms which govern the formation of a coating are of a very critical nature and are often difficult to govern in the desired direction. Thus, it can be extremely difficult to produce relatively thick coatings of aluminum oxide using known processes if the coatings are to be uniformly distributed around the coated body. If one wants to use the known processes (see for example Swedish pat. 351.984, US Pat. 3.736.107, US Pat. 3.836.392 and Swedish pat. 406.090) in order to produce such coatings, drastic modifications of the coating conditions are needed. However, such modifications often give rise to conditions in the process, which are harmful to the substrate or lead to significant reduction of production capacity.

The present invention now makes it possible to produce cemented carbide bodies having aluminum oxide coatings of uniform thickness around the individual body and with, among other things, thicknesses in ranges of interest in cutting applications. The coatings pertaining to the invention can be applied to previously coated as well as uncoated cemented carbide substrates, e.g., substrates containing at least one carbide in addition to the binder metal. The coatings can also form surface or intermediate layers in multiple coatings of various kinds. The coating can advantageously be deposited on intermediate layers of wear resistant carbides, nitrides, carbonitrides, oxides, borides or combinations and/or mixtures of such compounds, applied in the form of one or more successive layers. The invention can also be of advantage in the deposition of coatings on ceramic bodies.

The carbides, nitrides, oxides and borides mentioned above, as well as combinations thereof may be one or several of the elements Ti, Zr, Hf, V, Nb, Ta, Cr, Mo, W, Si and, where applicable, B.

Layers of titanium carbide, nitride and/or carbonitride are especially suited as intermediate layers.

When the aluminum oxide coating is deposited, a gas consisting of one or more halides of aluminum and heated to a high temperature is brought in contact with the substrate. A distinct feature of the invention is that a controlled amount of sulfur, selenium and/or tellurium is supplied to the substrate during the deposition. The dopant is preferably sulfur and the process of the present invention will be described herein below with reference to sulfur (unless otherwise indicated) although it will be understood that it is equally applicable to selenium, tellurium and mixtures of all of the various dopants.

A suitable form for this additional supply of the dopant is a gas with molecules containing the elements mentioned above. According to the present invention, sulfur is generally introduced in the process in compound form. However, in order that the effects encompassed by the invention be realised, it is important that the compound used for the supply of sulfur (or the other elements mentioned) is not only of adequate purity but also free from elements which have a detrimental effect on the process itself or on the product made by means of the process. The sulfur-containing component (or components) participating in the process should therefore be of such a composition that it (they) do not contain any foreign elements which are harmful to the process. As known in the CVD-art, silicon is an element which is considered harmful. Other elements or compounds which would also interfere with the straight forward manner of the process of the present invention should also be avoided. An example of a compound which satisfies these requirements and which permits a carefully controlled and optimized introduction into the gas mixture used in the process is hydrogen sulfide ($H_2S$). Carbonoxysulfide (COS) can also be used to advantage.

When sulfur (selenium, tellurium or mixtures thereof) is introduced into the process in accordance with the present invention, a large increase in the growth rate of the aluminum oxide coating is quite surprisingly obtained in such a way that requirements regarding a uniformly thick coating of aluminum

2

oxide around the coated body are met. A coating produced according to the present invention has quite surprisingly, such mechanical, physical and chemical properties as to provide the coated body with a performance in technologically interesting applications which clearly exceeds the performance of products manufactured by means of similar processes not using the method which characterizes the present invention. If, on the other hand, the process described by the invention is adjusted with respect to coating thickness and thickness distribution in such a manner that the finished product is more or less identical with products manufactured by means of known processes, quite surprisingly, a product is obtained having a performance which is in no way inferior to that of the latter products.

These unexpected effects of the invention can be observed quite easily, among other things in the technologically important areas of cutting and wear. In all those instances where excessive coating thicknesses around edges and corners are disadvantages, a considerably improved performance is obtained when products are used that have been manufactured according to the process described by the present invention. The explanation as to why the invention leads to such a drastic modification of the growth mechanisms of the aluminum oxide coating is of a theoretically complex nature and is at present not quite clear, but it can be mentioned that the effects caused by the process as described by the invention are remarkably similar to what is to be expected from such chemical processes which depend upon catalysts. As far as is presently known, the product described by the invention cannot be manufactured by means of other known processes for aluminum oxide coatings and the processes of the present invention is definitely the most simple method of production available so far.

The process described by the invention can thus give rise to an increased rate of deposition as compared to processsess which do not make use of sulfur and similar additions.

Depending upon the amount of sulfur added to the gas phase, growth rates can be obtained which with about 4 $\mu$m/h per vol-% $H_2S$ (in the concentration range 0.01—0.2% $H_2S$) or more exceed the rate 0.1 $\mu$m/h typical for coatings produced without the addition of sulfur (c.f. the examples below). In addition to increasing the rate of production of coatings, the increase in the rate of deposition is of direct benefit for the quality of the coating in that an increased rate reduces the period of time during which coating and substrate are treated at a high temperature. This reduces the probability of detrimental changes in the structure and composition of coating and substrate respectively which might occur as a result of prolonged exposure to higher temperatures. As has been indicated above, the principal method of producing an aluminum oxide coating is, according to the invention, by means of CVD-techniques in combination with an addition of sulfur. This applies to substrates consisting exclusively of hard materials (together with a binder metal where applicable) as well as for substrates already having one or more coatings.

If necessary, the cemented carbide substrate may have a surface region enriched with respect to the so-called gamma phase. This holds true for those instances when additional layers are to be added on to the aluminum oxide coating produced according to the invention. A CVD-process made according to the invention can be done in a step separate from the deposition of the other layers but should preferably be made successively in the same apparatus so that well-defined surfaces are available for each deposition step.

An amount of methane from about 0.5 to about 90 vol. % of the total amount of the supplied gas may be added to the gas for the $Al_2O_3$ coating step so that at least a substantial portion, often at least about 85%, of the $Al_2O_3$ is in the kappa form. The methane thus acts in the same manner as the dopant disclosed in commonly assigned U.S. Patent 4.180.400 and may be added in conjunction with the sulfur dopant in those instances where the kappa form is desired and uneven $Al_2O_3$ layers are not critical.

The aluminum oxide coating is typically 0.1—20 $\mu$m and preferably 0.3—9 $\mu$m. The thicknesses of the intermediate or of the successive layers, on top of as well as beneath the aluminum oxide layer under consideration, normally fall in the range of 0.1—20 $\mu$m, that is, they are of the same order of magnitude.

In those instances when intermediate coatings of wear-resistant carbides, nitrides, carbonitrides and borides as well as combinations thereof are applied, the thickness of the aluminum oxide layer is usually 0.3—9 $\mu$m.

The methods used in producing cemented carbide bodies in accordance with the invention are illustrated by means of Examples 1 to 17 below and by the Figures in which:

Figure 1 is a sketch of production apparatus useful in coating a substrate with a suitable metal carbide, nitride and/or carbonitride;

Figure 2 is a sketch of equipment useful in coating a substrate with aluminum oxide; and

Figure 3 is a graph of the growth rate of the alumina coating vs. amount of $H_2S$ in the gas.

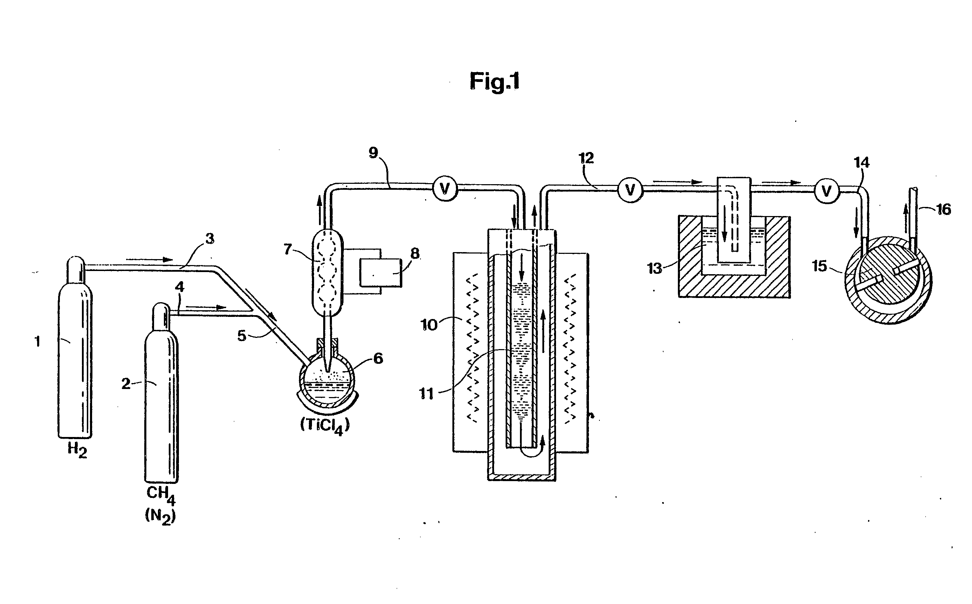

The equipment shown in Figure 1 consists of sources of gas, for example gas tubes 1 and 2 for the supply of hydrogen, methane and/or nitrogen. The conduits 3 and 4 each join a source of gas with conduit No. 5 through which the gas mixture is transported to a vessel 6 where a metal halide, e.g., $TiCl_4$, is heated so as to give off an adequate amount of vapor. The mixture of these gases is then fed to the reactor 11 via a common conduit 9. The gas mixture thereby passes a heat exchanger 7 which is controlled by a thermostat 8 so that the amount of $TiCl_4$, in the gas mixture is held at the correct level. The substrate to be coated is placed in the reactor 11, the latter being heated by an oven 10. The gas is

3

sucked out of the reactor via a conduit 12 equipped with a valve and a cold trap 13. The system is evacuated via a conduit 14 by means of a vacuum pump 15 with an exhaust pipe 16.

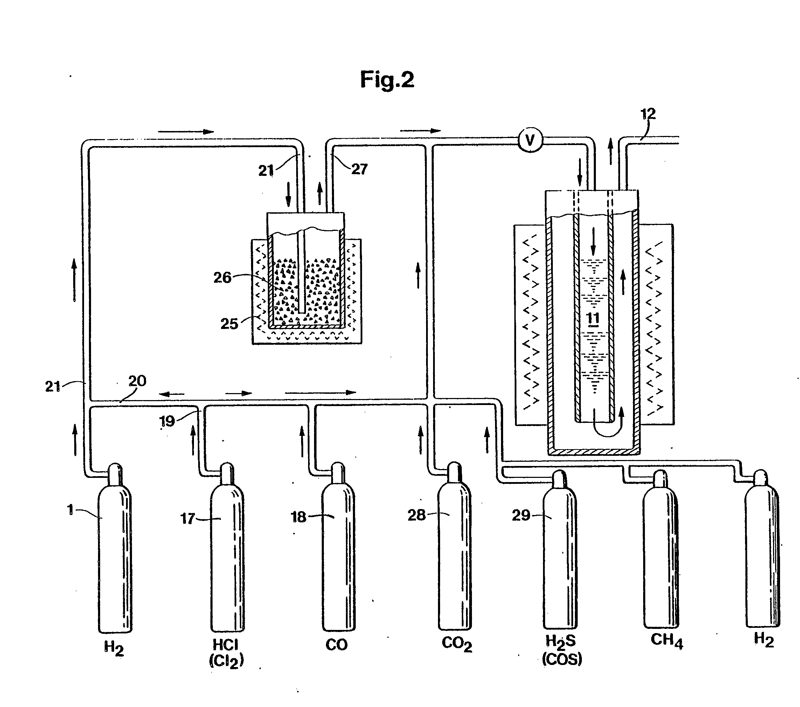

The equipment outlined in Figure 2 illustrates the use of a separate reactor 25 for the chlorination of Al, the latter being in the form of e.g., grains or chips 26. In order to obtain this chlorination, hydrogen from a source of gas 1 is mixed with chlorine or hydrochloric acid via conduits 19 and 20, the latter coming from the source 17. The mixture is then brought to the chlorination reactor via a conduit 21.

The gas mixture from the chlorination reactor 25 is then further mixed with hydrogen, as well as with carbon monoxide and carbon dioxide from the sources 18 and 28 respectively. This gas mixture is then routed to the deposition reactor 11 via the conduit 27 which is equipped with a valve. (The systems for purifying the gases have been left out in the Figures).

The deposition of aluminum oxide can thus be performed by means of a process namely hydrolysis of an aluminum halide, viz. preferably a chloride ($AlCl_3$), using water vapor (oxygen).

As indicated above, the aluminum halide can be produced in the form of a gas either by evaporation of the solid or liquid phase or by reacting metallic aluminum with chlorine or hydrochlorine gas (26). The water vapor can be added to the gas phase either by evaporation of water or, preferably, by reacting hydrogen with carbon dioxide (28). Sulfur or corresponding elements or compounds can be added to the gas phase by adding preferably gases or gas mixtures (29) containing sulfur or compounds of sulfur. It is recommended that the addition is made in the form of hydrogen sulfide ($H_2S$), which is introduced throughout the whole process or part of the process. Sulfur or sulfur compounds may also be generated in the reactor in situ.

The reactants are fed into the reactor 11, in which the bodies which are to be coated have been placed. The bodies can be heated either directly by means of induction heating or indirectly by heating e.g. supporting plates or the reactor itself by e.g., resistance heating (10). The deposition temperature can be in the range 700°C to 1200°C, but preferably in the range 950°C to 1150°C.

The concentrations of aluminum chloride vapor in the gaseous mixture of reactants should preferably be over stoichiometric with respect to the water vapor. The concentration of the sulfur-, selenium- or tellurium-containing gas should be in the range 0.01—1, preferably be in the range 0.02—0.3 vol-% per atom of S, Se or Te in the gas molecule as referred to the total gas volume being brought into the reactor.

It is also important that the concentration of carbon dioxide be monitored carefully. The amount of sulfur-containing gas recommended above refers to the case of roughly stoichiometric proportions of carbon dioxide and aluminum chloride in the gas entering the reactor at a temperature of 1000°C and 6 kPa. The total pressure of the gaseous phase can be in the range of 0.1—100 kPa, but should preferably be in the range 1—30 kPa.

It is often easy to demonstrate the presence of sulfur in a coating or in adjacent parts of the substrate including any intermediate layer by means of microprobe analysis. More sophisticated methods of analysis, e.g. ion-microprobe, proton induced x-ray emission spectroscopy or Auger analysis can be used to detect even extremely small amounts of sulfur or effects caused by the presence of sulfur. Excellent performance has been observed when the coating and/or the surface of the substrate has contained minor amounts, e.g., more than 0.1 weight-%, sulfur, selenium or tellurium. It will be understood that significant amounts of these materials need not be present and could adversely affect the use of the coated bodies in certain applications, i.e., wear-resistant cutting inserts.

A few examples will be given below in order to illustrate various conditions which can be used to produce aluminum oxide coatings according to the invention. Results from tests using bodies coated in such a manner will also be given.

The invention is additionally illustrated in connection with the following Examples which are to be considered as illustrative of the present invention. It should be understood, however, that the invention is not limited to the specific details of the Examples.

Example 1

Coating with an intermediate layer of TiC is performed in a reactor, the essential parts of which are made of "Inconel" alloy.

In this reactor vessel, 3000 sintered cemented carbide inserts are heated to 1000°C. The inserts to be coated are produced according to ISO Standard M20 and contain cubic carbides and WC.

The inserts are placed on strainer-like plates providing good contact with the surrounding gas. The gas, which consists of a mixture containing 10% $TiCl_4$, 8% $CH_4$ and 82% $H_2$, by vol., manufactured in a normal way, is brought to the reactor in one single conduit. The pressure in the reactor is maintained at 2 kPa by sucking out the gas from the reaction vessel by means of a vacuum pump protected from corrosive reaction products (for instance HCl) by the help of a cooling trap with liquid nitrogen situated ahead of the pump. In this way a linear gas flow rate of 1 m/sec is obtained in the charge.

The inserts are treated for 2 hours.

As a result of the treatment, a fine-grained, tight TiC-layer of about 2 $\mu$m thickness is obtained. The amount of embrittling $\eta$-phase, because of decarburizing, is very small.

In a separate, second step the 3000 inserts are treated in an apparatus nearly identical to the one described, the gas supply system being modified, however, so that a gas with the composition 69, 9% $H_2$, 5% $CO_2$, 20% CO, 0.1% $H_2S$ and 5% $AlCl_3$ (by vol.) can be used.

The temperature of the substratum is 1050°C and the pressure 5 kPa. A linear gas flow rate of 5 m/sec. is used. After a coating time of 3 hours, a 3 μm thick layer of $Al_2O_3$ is formed on the TiC-coated cemented carbide inserts.

The binding between the $Al_2O_3$ layer and TiC layer is good and almost no embrittling $\eta$-phase is formed. Some cemented carbide inserts of the same type and grade but not coated with TiC, are, in the same $Al_2O_3$ coating operation, given a 15 μm thick, porous and poorly adhering layer of $Al_2O_3$.

A cutting test is performed in the form of continuous turning in cast iron, grade SIS 0125 (composition C=3.48, Si=1.5%, Mn=0.7%, HB 220) under the following conditions:

| | |
|---|---|
| Cutting speed: | 200 m/min |
| Feed: | 0.3 mm/rev |
| Depth of cut: | 2 mm |
| Style of insert: | SPUN 120308 |

The tool life, measured according to current standards, is estimated as follows:

| Grade corresponding to | Life of inserts (min) |
|---|---|
| 1 ISO M20, uncoated | 6.6 min (standard) |
| 2 ISO M20, TiC-layer only 4 μm thick | 20.3 min (standard) |
| 3 ISO M20, TiC+$Al_2O_3$-layer (2+2 μm, ea) | 30.3 min (without $H_2S$) |
| 4 ISO M20, TiC+$Al_2O_3$-layer with $H_2S$ (2+3 μm) | 48.7 min |
| 5 ISO M20, $Al_2O_3$-layer only | 8 min (without $H_2S$) |

According to these results it is evident that the insert produced according to the invention (No. 4 in the Table above) gives a superior tool life compared with the remaining inserts.

Example 2

Specimen group (a)

This specimen group is produced in a similar manner as described in Example 1, except for some differences mentioned in the following:

1. Titanium carbide layer and aluminum oxide layer are deposited without cooling down between the process steps.

2. 4 μm TiC is deposited using the following conditions:

| | | | |
|---|---|---|---|
| Gas velocity | 1 m/s | Gas composition: | |
| Temperature | 1020°C | $CH_4$ | 4% |
| Pressure | 7 kPa | $TiCl_4$ | 4% |
| Time | 7 h | $H_2$ | balance |

3. 1 μm $Al_2O_3$ is deposited using the following conditions:

| | | | |
|---|---|---|---|
| Gas velocity | 3 m/s | Gas composition: | |
| Temperature | 1030°C | $H_2S$ | 0.07% |
| Pressure | 7 kPa | $CO_2$ | 5% |
| Time | 3 h | HCl | 2% |
| | | $AlCl_3$ | 2% |
| | | $H_2$ | balance |

4. Substrate: WC 86% (by weight), cubic carbides (TiC, TaC, NbC) 9%, balance being Co.

Only minor amounts of eta phase are obtained.

Specimen group (b)

Inserts coated without $H_2S$ during similar conditions but for 8 h coating time to obtain 1 μm $Al_2O_3$. On the edges of the inserts, however, a coating thickness of 2—8 μm $Al_2O_3$ is obtained.

Comparative test:

In a comparative intermittent finishing operation (work piece Steel SIS (Swedish International Standard) 2541): analyses: C=0.36, Si=0.30, Mn=0.7, S=0.03, Cr=1.4, Ni=1.4, Mo=0.2%, HB (hardness) 290 (work piece diam. 160—140 mm, length 700 mm, with one milled longitudinal slot, width 25 mm) the following test is run:

5

| Cutting speed: | 300 m/min |
|---|---|
| Depth of cut: | 1.0 mm |
| Feed: | 0.15 mm/rev. |

The operation is performed as paired comparative tests of inserts according to the invention (a) and inserts according to (b), results in the following relative tool life values:

    (a) 1.0
    (b) 0.55

Example 3

The Example is carried out similarly to Example 2 but with the following modifications:

(a) The time for TiC-deposition is 6 h and for $Al_2O_3$-coating 8 h (substrate with a relatively high carbon content).

The inserts are coated with 5 $\mu$m TiC+3 $\mu$m $Al_2O_3$.

(b) Inserts are coated similar to (a) but COS is used instead of $H_2S$ as the dopant. 3 $\mu$m of $Al_2O_3$ is obtained.

(c) Inserts coated with 5 $\mu$m TiC+0.8 $\mu$m $Al_2O_3$ in accordance with conventional technique (no dosage of sulfur). (Compare U.S. Patent RP. 29.420, Example 7).

(d) Inserts are produced according to (c), but in this case the inserts are placed with a much greater space between the objects to be coated and the temperature is increased to 1060°C during the oxide deposition in order to obtain 5 $\mu$m TiC+3 $\mu$m $Al_2O_3$ coatings.

(e) Insert coated with a layer of 3 $\mu$m TiC+3 $\mu$m $Al_2O_3$ in accordance with conventional technique (compare U.S. patent No. 4.180.400 Example 2).

(f) Insert coated with a layer of 5 $\mu$m $Al_2O_3$ in accordance with conventional technique (compare U.S. Patent No. 3.836.392, Example 3). Obtained in an experiment in a laboratory scale reactor.

(g) Insert coated with a layer of 4 $\mu$m $Al_2O_3$ in accordance with conventional technique (compare U.S. Patent No. 3.736.107, Example 3)—however, in this case considerably thicker layers were obtained on the edges.

The inserts produced in accordance with the invention ((a) and (b)) are distinguished by their evenly distributed $Al_2O_3$ coating all around the inserts, whereas the inserts (c) through (g) are unevenly coated by $Al_2O_3$ (thicker layers on edges, approximately in increasing degree (c) through (g)).

Cutting operations are carried out similar to Example 1 on another work piece of this same type. The inserts are divided into two test groups. Samples (a) through (d) constitute the first group, whereas (e) through (g) constitute the other. Additionally, in the second group an insert produced in accordance with (a) is tested in order to make a comparison between the two groups. The relative tool life for inserts produced in accordance with (a) is arbitrarily assigned number 10.

| Tested insert | Substrate (cemented carbide grade) | Tool life (relative) |
|---|---|---|
| (a) | see above (according to invention) | 10 |
| (b) | as in (a) | 9 |
| (c) | as in (a) | 6 |
| (d) | as in (a) | 8 |
| (e) | as in (a) (approximately compare Ex. 2 U.S. pat. 4.180.400) | 8 |
| (f) | as in (a) | 6 |
| (g) | as in (a) but without coating | 3 |
| (h) | reference as in (a) but without coating | |

Example 4

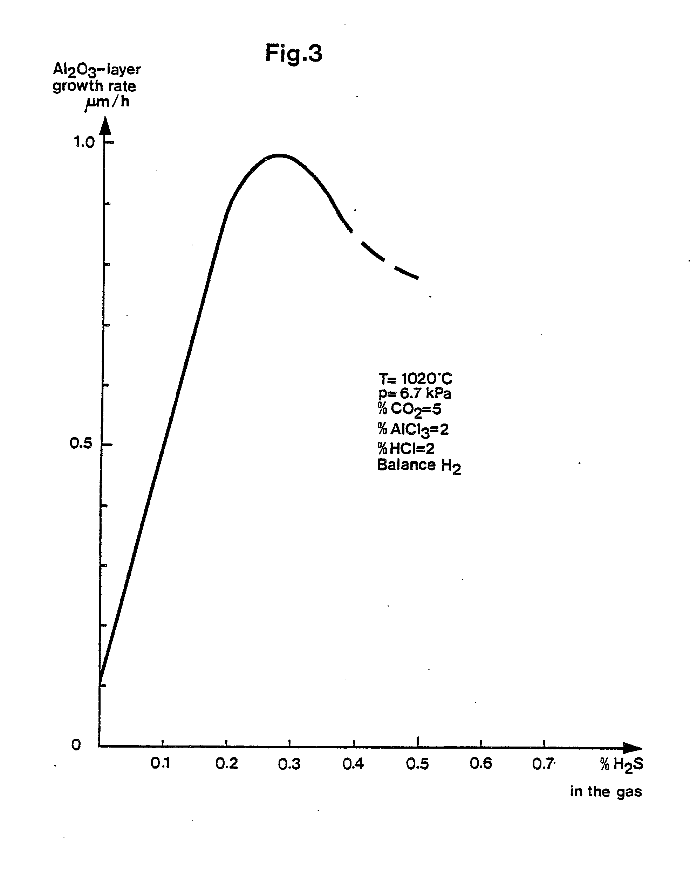

Coating of a TiC-coated cemented carbide substrate with $Al_2O_3$ is performed using a CVD technique at a temperature of 1020°C and a pressure of 8 kPa. The gas composition is $CO_2$ 5%, $AlCl_3$ 2%, HCl 2%, balance being $H_2$, but a variable amount of $H_2S$ is added during the deposition process. The growth rate of the $Al_2O_3$-layer formed ($\mu$m/h) is measured at various amounts of $H_2S$. The results are shown in Figure 3. It should be noted that the growth rate increases considerably with small amounts of added $H_2S$, and the optimal growth rate is achieved at larger amounts of $H_2S$.

Example 5

Inserts are produced comprising a surface zone of gamma phase using the following method.

6

The substrate is chosen in accordance with Example 1.

The inserts are treated in a nitrogen atmosphere (pressure 5 kPa) at 1410°C for 30 minutes (graphite in the furnace), whereafter the inserts are cooled. Grains of gamma phase have been enriched in the surface zone of the inserts to a 0.5—2 $\mu$m thick continuous zone.

These inserts are coated in four different manners with $Al_2O_3$ ((a) and (b)) or $TiC+Al_2O_3$ ((c) and (d)).

(a) With 5 $\mu$m $Al_2O_3$ as in Example 3(a)—however, the duration of the deposition is increased above 70% and the amount of HCl is increased to 3.5%.

(b) With 5 $\mu$m $Al_2O_3$ but without $H_2S$ (deposition as in Example 3(d)—the duration of the deposition is increased with 70% and the HCl content to 3.5%).

(c) Coating with $Al_2O_3$ is performed in accordance with (a) but a very thin TiC-layer (0.2 $\mu$m) is positioned immediately under the $Al_2O_3$-layer.

The TiC coating is deposited in accordance with Example 2 but the duration of the deposition is decreased to 1 h.

(d) TiC-layer as in (c) and $Al_2O_3$-layer as in (b).

No embrittling $\eta$-phase can be detected in the surface zones. The inserts are tested in cast iron of the same kind as in Example 1. The inserts reveal similar results, but in order of decreasing tool life (c), (a), (d) and (b).

The inserts produced without any $H_2S$ in the gas have comparatively thicker $Al_2O_3$-layers in edge areas, which causes rapid flank wear. The inserts according to (a) and (c) on the other hand have very even layers of $Al_2O_3$ all over the coated objects.

Example 6

The same kind of equipment for deposition as in Example 1 is used. 800 inserts style TNMM 120308, substrate cemented carbide grade according to ISO standard M20, are separated into two groups, which are coated with and without $H_2S$. In group (a) $H_2S$ is added, the group (b) inserts being coated the same way except that the $H_2S$ is not added to the coating gas composition.

In the following conditions for group (a) are given.

After heating in $H_2$ the inserts are coated with 5 $\mu$m TiC:

| | | | |
|---|---|---|---|
| Temperature: | 1030°C | Gas composition: | |
| Pressure: | 7 kPa | $TiCl_4$ | 4% |
| Time: | 7 h | $CH_4$ | 4% |
| Gas velocity: | 1 m/s | $H_2$ | balance |

The starting up procedure is 70 minutes.

After a total transition time of 1.5 h, in which $H_2S$-flow is added as a last step, the following $Al_2O_3$ coating process is used in order to obtain an about 2 $\mu$m thick $Al_2O_3$-layer (group (b) inserts obtain about 1 $\mu$m $Al_2O_3$):

| | | | |
|---|---|---|---|
| Temperature: | 1030°C | Gas composition: | |
| Pressure: | 7 kPa | $AlCl_3$ | 2% |
| Time: | 6 h | HCl | 2% |
| Gas velocity: | 4 m/s | $CO_2$ | 5% |
| | | $H_2S$ | 0.025% |
| | | $TiCl_4$ | 0.025% |
| | | $H_2$ | balance |

After the completion of the TiC deposition, 0.5 h elapses before the $Al_2O_3$-deposition is started.

The deposition was terminated by an extra process step whereby an extra very thin (about 0.2 $\mu$m) layer of yellow TiN is deposited. This is immediately after the $Al_2O_3$ deposition.

| | | | |
|---|---|---|---|
| Temperature: | 1030°C | Gas composition: | |
| Pressure: | 7 kPa | $TiCl_4$ | 4% |
| Time: | 0.5 h | $N_2$ | 48% |
| Gas velocity: | 2 m/s | $H_2$ | 48% |

By microscopic investigation it is shown that the inserts of group (a) have got a considerably more even distribution of the $Al_2O_3$-layer around the inserts than inserts of group (b).

A continuous cutting operation is performed in a work piece material SKF 25.B (composition: C=1.0, Si=0.3, Mn=0.3, Cr=1.8, Mo=0.35% by weight, HB (hardness)=210) at the following conditions:

| Cutting speed: | 220 m/min |
| Feed rate: | 0.36 mm/rev |
| Depth of cut: | 2 mm |

The relative tool life determined according to current norms is
(a) 1.3
(b) 1.0

Example 7

Inserts are produced in accordance with Example 6 excepting that a 0.2 $\mu$m thick TiN-layer is not deposited. The difference between inserts of group (a) and (b) is the same as in Example 6.

The inserts are tested in cast iron of the same kind as in Example 1 with the following cutting conditions:

| Cutting speed: | 200 m/min |
| Feed rate: | 0.3 mm/rev |
| Depth of cut: | 2 mm |
| Insert style: | SPUN 120308 |

The relative tool life determined according to current norms is the following:
(a) 1.7
(b) 1.0

Example 8

Inserts are made according to Example 2(a) with the exception that 0.5 $\mu$m TiN is deposited immediately after the TiC-coating using conditions as in Example 6.

Example 9

Inserts are produced as in Example 8 but 0.3% $H_2S$ is added to the gas. The duration of the $Al_2O_3$-deposition can be reduced by 50%.

Example 10

Inserts are produced as in Example 8 but 0.05% $H_2Se$ is added to the gas mixture (the amount of $H_2S$ is reduced accordingly).

Example 11

The following deposition conditions are used for a coating experiment in a vertical tube furnace with an internal diameter of 4 cm:

| Temperature: | 1000°C |
| Pressure: | 7 kPa |
| Time: | 30 min |
| $CO_2$: | 200 cm³/min NTP |
| $H_2$: | 200 cm³/min NTP |
| $AlCl_3$: | 0.8 cm³/min NTP |
| $H_2S$: | 0.2% (a) |
| $H_2S$: | 0.0% (b) |

The same type of substrate as in Example 1. No TiC intermediate layer was deposited.

A cutting test yields similar results in two cases, one with and one without $H_2S$.

The distribution of the layer around the inserts is more even when $H_2S$ is used.

Example 12

Inserts are coated similarly to Example 6 except that $TiCl_4$ is not dosed during the $Al_2O_3$ deposition is 8 h. Style of inserts: SPUN 120308.

A cutting test is performed similarly to Example 6 except that a feed rate of 0.45 mm/rev is used.

Inserts of group (a) reveal a tool life of 1.2 relative to the inserts of group (b) (with no $H_2S$), which are assigned a tool life of 1.0.

By inspection in a microscope it is evident that inserts of group (a) have considerably more evenly distributed layers around the inserts than inserts of group (b).

Example 13

Inserts are coated in accordance with Example 2, but instead of TiC as an interlayer NbC produced in accordance with a known method is used. (The inserts are coated by NbC in a separate process step with an intermediate cooling period).

8

Example 14

Inserts (group (c)) are coated similar to Example 12. Substrate: ISO standard P40, style of inserts TNMM 160408.

In a turning test using a work piece material of grade SKF 25 B (see Example 6) the following conditions are used:

Feed rate:      0.36 mm/rev
Depth of cut:   2 mm
Cutting speed:  200 m/min

The following inserts are tested:

(a) TiC-layers about 5 $\mu$m GC 135=commercial Sandvik grade)
(b) Inserts with about 1 $\mu$m Al$_2$O$_3$ on top of 5 $\mu$m TiC (compare (a))
(c) Inserts according to this Example.

Achieved tool lives:
     (a)  10 min
     (b)  13 min
     (c)  20 min

Example 15

Ceramic inserts are coated in accordance with Example 5. Remarkably evenly distributed layers of Al$_2$O$_3$ are obtained.

Example 16

Inserts are coated in the same manner as in Example 2(a) except that the flow of CH$_4$ is increased by a factor of four after the TiC deposition in order to obtain about 5% CH$_4$ during the Al$_2$O$_3$ deposition step.

Inserts produced according to Example 2 give a large percentage of the alpha modification of Al$_2$O$_3$ (more than 90% of the surface). Inserts produced according to Example 16 give only about 1—75% alpha modification, the rest being the kappa modification.

In a cutting test performed similarly to the one described in Example 2 the following results are achieved:

Relative tool lives:

(a) 1.0      (a) as in Example 2
(b) 0.45     (b) as in Example 2
(c) 1.2      Example 16.

Similar tests are performed without H$_2$S gas in the Al$_2$O$_3$ coating step yield products with uneven coating layers but substantial, i.e., greater than 50%, amounts of the Al$_2$O$_3$ being in the kappa form which is advantageous for the reasons given in commonly assigned U.S. Patent 4.180.400.

Example 17

Inserts are coated similarly to Example 16 except that TiCl$_4$ is added to the gas feed to an amount of 4%.

The principles, preferred embodiments and modes of operation of the present invention have been described in the foregoing specification. The invention which is intended to be protected herein, however, is not to be construed as limited to the particular forms disclosed, since these are to be regarded as illustrative rather than restrictive.

**Claims**

1. Method of making a body comprising a substrate or core of one or more cemented carbides or ceramics and at least one thin, wear resistant surface layer consisting essentially of aluminum oxide, in which the substrate is contacted with a gas containing one or more halides of aluminum and a hydrolyzing and/or oxidizing agent at high temperature, to form the aluminum oxide layer, characterized in that an amount of sulfur, selenium and/or tellurium is added to the gas.

2. Method according to claim 1, wherein the added amount of sulfur, selenium and/or tellurium is from about 0.01 to 1% by volume of the total gas volume.

3. Method according to claim 2, wherein the added amount of sulfur, selenium and/or tellurium is from about 0.02 to 0.3% by volume of the total gas volume.

4. Method according to claim 1, wherein the addition also includes methane gas whereby a significant portion of the aluminum oxide layer is obtained in the kappa form.

9

5. Coated body produced with the method according to claim 1, characterized in that the aluminum oxide layer and/or the surface zone of the substrate contains minor amounts of sulfur, selenium and/or tellurium.

## Patentansprüche

1. Verfahren zur Herstellung eines Körpers mit einem Substrat oder Kern aus einem oder mehreren Sintercarbiden oder keramischen Materialien und wenigstens einer dünnen, verschleißfesten Oberflächenschicht, die im wesentlichen aus Aluminiumoxid besteht, wobei das Substrat mit einem ein oder mehrere Aluminiumhalogenide und ein hydrolysierendes und/oder oxidierendes Mittel enthält, bei hoher Temperatur unter Bildung der Aluminiumoxidschicht behandelt wird, dadurch gekennzeichnet, daß dem Gas eine Menge an Schwefel, Selen und/oder Tellur zugesetzt wird.

2. Verfahren nach Anspruch 1, worin die zugesetzte Menge an Schwefel, Selen und/oder Tellur bei etwa 0,001 bis 1 Volumenprozent des gesamten Gasvolumens liegt.

3. Verfahren nach Anspruch 2, worin die zugesetzte Menge an Schwefel, Selen und/oder Tellur bei etwa 0,002 bis 0,3 Volumenprozent des gesamten Gasvolumens liegt.

4. Verfahren nach Anspruch 1, worin die Zugabe auch Methangas einschließt, wodurch ein wesentlicher Anteil der Aluminiumoxidschicht in der kappa-Form erhalten wird.

5. Überzogener Körper, der nach dem Verfahren gemäß Anspruch 1 hergestellt wurde, dadurch gekennzeichnet, daß die Aluminiumoxidschicht und/oder die Oberflächenzone des Substrates kleinere Mengen an Schwefel, Selen und/oder Tellur enthält.

## Revendications

1. Procédé de préparation d'un corps comportant un substrat ou noyau constitué d'au moins un carbure fritté ou une céramique, et au moins une couche de surface mince, résistant à l'usure, constituée essentiellement d'alumine, dans lequel le substrat est mis en contact à haute température avec un gaz contenant au moins un halogénure d'aluminium et un agent hydrolysant et/ou oxydant pour former la couche d'alumine, caractérisé en ce que du soufre, du sélénium et/ou du tellure est ajouté au gaz.

2. Procédé selon la revendication 1, caractérisé en ce que la quantité ajoutée de soufre, de sélénium et/ou de tellure est, en volume, de 0,01 à 1% duvolume total du gaz.

3. Procédé selon la revendication 2, caractérisé en ce que la quantité ajoutée de soufre, de sélénium et/ou de tellure est, en volume, de 0,01 à 1% du volume total du gaz.

4. Procédé selon la revendication 1, caractérisé en ce que l'adjonction comporte également du gaz méthane, de sorte qu'une partie appréciable de la couche d'alumine est obtenue sous la forme kappa.

5. Corps revêtu obtenu par le procédé selon la revendication 1, caractérisé en ce que la couche d'alumine et/ou la zone superficielle du substrat contient une faible quantité de soufre, de sélénium et/ou de tellure.

Fig.1

Fig.2

## Fig.3

Al₂O₃-layer growth rate µm/h (y-axis)

% H₂S in the gas (x-axis)

T= 1020°C
p= 6.7 kPa
% CO₂=5
% AlCl₃=2
% HCl=2
Balance H₂